Europäisches Patentamt

European Patent Office

Office européen des brevets

(19)

(11) **EP 0 909 092 A2**

(12) **EUROPEAN PATENT APPLICATION**

(43) Date of publication:
**14.04.1999 Bulletin 1999/15**

(51) Int. Cl.$^6$: **H04N 7/01**

(21) Application number: **98118653.9**

(22) Date of filing: **02.10.1998**

(84) Designated Contracting States:
**AT BE CH CY DE DK ES FI FR GB GR IE IT LI LU MC NL PT SE**
Designated Extension States:
**AL LT LV MK RO SI**

(30) Priority: **07.10.1997 JP 290307/97**

(71) Applicant: **Hitachi, Ltd.**
**Chiyoda-ku, Tokyo 101-8010 (JP)**

(72) Inventors:
• **Hirano, Yasuhiro**
  **Hachioji-shi (JP)**
• **Ishikura, Kazuo**
  **Yokohama-shi (JP)**

• **Sugiyama, Masato**
  **Yokohama-shi (JP)**
• **Nakajima, Mitsuo**
  **Yokohama-shi (JP)**
• **Kurita, Toshiyuki**
  **Yokohama-shi (JP)**
• **Matono, Takaaki**
  **Yokohama-shi (JP)**
• **Takata, Haruki**
  **Yokohama-shi (JP)**

(74) Representative:
**Strehl Schübel-Hopf & Partner**
**Maximilianstrasse 54**
**80538 München (DE)**

(54) **Method and apparatus for video signal conversion**

(57)    A method and apparatus for video signal format conversion are provided which can suppress picture quality deterioration by simple signal processing, and produce high-quality pictures with low cost. A motion compensation frame rate converter (2) detects a motion vector BV by using a block unit motion vector estimation block (5), and generates a pixel unit motion vector PV in mini-block units by using a pixel unit motion vector generator (6). A motion compensation interpolated frame generator (7) generates a compensation vector by using a motion compensation vector generator (10) on the basis of this PV, and generates motion compensation signals by using current and previous frame motion compensation signal generators (8) and (9). A motion compensation signal setter (11) produces a frame rate converted signal S4 by generating interpolated frame signals from the average value of both signals when the difference signal between the absolute values of both compensation signals is smaller than a threshold, or from a frame signal closer to an interpolation frame from the time point of view when it is larger than or equal to the threshold.

FIG.1

EP 0 909 092 A2

**Description**

BACKGROUND OF THE INVENTION

Field of the Invention

The present invention relates to a method and apparatus for video signal format conversion, and particularly to one suited to suppress the picture quality deterioration inherent with motion compensation, and to achieve the frame rate conversion for high-quality motion compensation.

Description of the Prior Art

The format conversion between video signals of different television systems is widely used to interchange programs in the broadcasting field. In general, since the format conversion needs to convert the scanning lines and field frequency, it causes a picture quality deterioration such as motion judder in which smoothness is lost in moving pictures.
Signal processing techniques for preventing this picture quality deterioration have so far been developed: a motion-adaptive scanning line number/progressive scanning conversion for scanning line number conversion, and a motion compensation-type frame rate conversion for frame rate conversion.
Of these methods, the motion compensation-type frame rate conversion changes the positions of the pictures of front and back frames by motion vector and generates a signal of interpolation frame. This method is extremely effective in removing the motion judder in moving pictures. Therefore, most of the format converters in the broadcasting field are of this type.
However, the motion compensation-type frame rate conversion generates a peculiar picture quality deterioration. In other words, a uniformly moving picture and part of an object are replaced in an isolated way by quite different pictures. That is, an isolation type deterioration is caused. Also in the region in which the background is hidden or made to appear by motion, the peripheral edge or outline of a moving picture flickers or unnaturally appears, or the resolution of the moving picture is deteriorated. A method for removing this picture quality deterioration is disclosed in, for example, JPA 7-336650. In this document, two input front and back fields on both sides of an interpolated field are used to make an interpolation processing to the uncovered region and covered region, or a field interpolation method is employed.

SUMMARY OF THE INVENTION

The prior art employs an extremely complicated signal processing for suppressing picture quality deterioration. Therefore, the format conversion apparatus for making this kind of signal processing has a large scale circuit construction, and a problem of high cost.
In view of the above problems, it is an object of the invention to provide a video signal format conversion method and apparatus that are able to suppress picture quality deterioration by simple signal processing and produce high-quality video signals with low cost.
The above object can be achieved by providing the steps of estimating a block unit motion vector on the basis of a video signal, generating a pixel unit motion vector on the basis of the block unit motion vector, and converting the frame rate of the video signal by using an interpolation frame of the video signal generated on the basis of the pixel unit motion vector or using an interpolation frame of the video signal generated from a frame signal of the video signal.
Here, the step of converting the frame rate of the video signal generates an interpolated frame signal of the video signal on the basis of the pixel unit motion vector when the difference component between the absolute values of a motion compensation signal produced by moving the current frame signal using a motion compensation vector and another motion compensation signal produced by moving the previous frame signal using a motion compensation vector is smaller than a threshold, and generates an interpolation frame of the video signal using a frame signal of the video signal when it is larger than or equal to the threshold. This absolute value difference component is obtained on the basis of the difference between the luminance signal components of two motion compensation signals or the difference between the luminance signal component and the color difference signal component. In addition, the interpolation frame of the video signal generated from a frame signal of the video signal is generated on the basis of a frame signal closer to one of the current frame and the previous frame from the time point of view.
The video signal format conversion apparatus according to the invention has a scanning converter for converting the video signal of interlaced scanning mode into a progressive scan type signal sequence, and a motion compensation frame rate converter for converting the frame rate of the progressive scan signal sequence by motion compensation type frame interpolation processing. The motion compensation frame rate converter has a motion detector for detecting the presence or absence of the motion of the video signal from the difference signal component between adjacent frames of the progressive scan signal sequence, a motion vector generator for generating a motion vector by block matching processing, and a motion compensation interpolation frame generator for generating an interpolation frame signal sequence by motion compensation processing using a motion compensation vector that is produced by a motion vector. The motion compensation interpolation frame generator generates an interpolated frame signal from a frame signal closer to one of the current frame and the previous frame from the time point of view when the difference component between the absolute values of the motion compensation signal produced by moving the current frame signal using the motion compensation vector and the motion correction signal produced by moving the previous frame signal using the motion compensation vector is larger than and equal to a threshold.

The motion compensation interpolation frame generator has a motion velocity detector for detecting a special motion of the video signal, and the frame interpolation processing operation using a motion compensation vector is limited when a motion is detected. In addition, when a scene change of a frame is detected by an accumulated value of the motion detected region of one frame period, the operation of frame interpolation processing using motion compensation vector is stopped for that frame, and an interpolation frame signal is generated from the current frame signal or the previous frame signal.

Therefore, it is possible to achieve a video signal format conversion method and apparatus that is able to suppress picture quality deterioration by simple signal processing and produce high-quality video signals with low cost.

BRIEF DESCRIPTION OF THE DRAWINGS

Fig. 1 is a block diagram showing the first embodiment of a format conversion apparatus according to the invention.
Fig. 2 is a block diagram showing a first example of the structure of a motion compensation interpolation frame generator.
Fig. 3 is a diagram briefly showing the operations in a control signal generator and a selector.
Fig. 4 is a block diagram showing a second example of the structure of the motion compensation interpolation frame generator.
Fig. 5 is a diagram briefly showing the operations in the control signal generator and the selector.
Fig. 6 is a block diagram showing an example of the structure of a block unit motion vector estimation block.
Fig. 7 is a flowchart of signal processing in the block unit motion vector estimation block.
Fig. 8 is a block diagram showing an example of the structure of a pixel unit motion vector generator.
Fig. 9 is a flowchart of signal processing in the pixel unit motion vector generator.
Fig. 10 is a block diagram showing the second embodiment of a format conversion apparatus according to the invention.
Fig. 11 is a block diagram showing the third embodiment of a format conversion apparatus according to the invention.
Figs. 12A to 12D are diagrams briefly showing the processing operations by a frame rate up signal.
Fig. 13 is a block diagram showing the fourth embodiment of a format conversion apparatus according to the invention.
Fig. 14 is a block diagram showing the fifth embodiment of a format conversion apparatus according to the invention.
Fig. 15 is a block diagram showing the sixth embodiment of a format conversion apparatus according to the invention.
Fig. 16 is a block diagram showing the seventh embodiment of a format conversion apparatus according to the invention.
Fig. 17 is a block diagram showing the eighth embodiment of a format conversion apparatus according to the invention.
Fig. 18 is a block diagram showing a first example of video format conversion.
Fig. 19 is a block diagram showing a second example of video format conversion.
Fig. 20 is a block diagram showing a third example of video format conversion.
Fig. 21 is a block diagram showing a fourth example of video format conversion.
Figs. 22A to 22C are diagrams briefly showing the operation of generating the interpolation frame signal for motion compensation frame rate conversion.
Fig. 23 is a flowchart for generating the motion compensation interpolation frame according to the invention.
Figs. 24A to 24B are diagrams briefly showing the generation of the interpolation frame signal according to the invention.

DESCRIPTION OF THE PREFERRED EMBODIMENTS

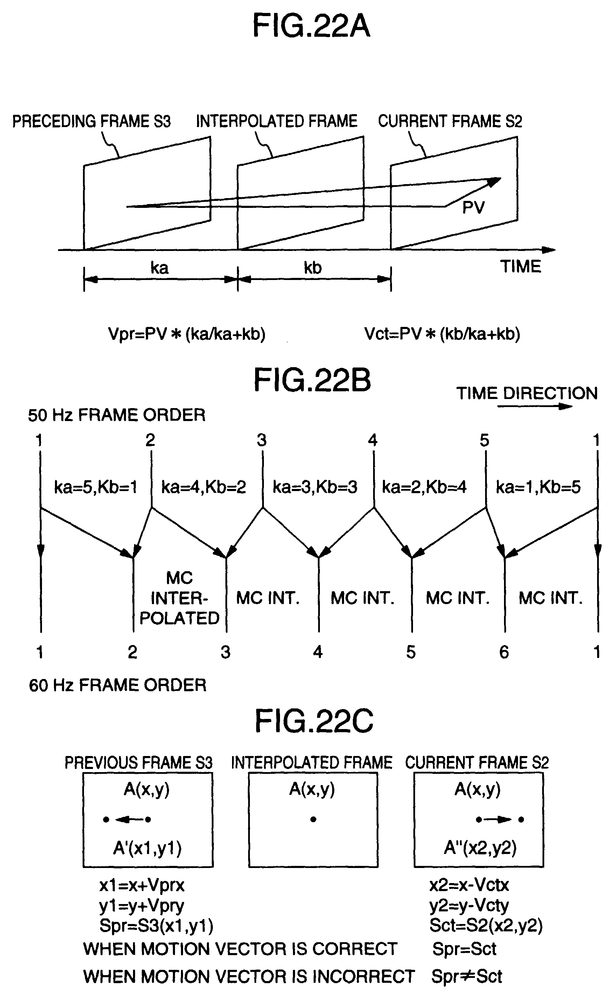

First, the generation of an interpolation frame signal in the motion compensation frame rate conversion will be described briefly with reference to Fig. 22, A to C.

Figs. 22A and 22B show the case in which a signal having a frame frequency of 50 Hz is converted into a signal of 60 Hz by motion compensation processing. The 60-Hz signal of frame order 1 is generated from the 50-Hz signal of frame order 1. A 60-Hz signal sequence of frame order 2, 3, 4, 5, 6 (as indicated by MC interpolated) is generated from the 50-Hz signals of frame order 1, 2, 3, 4, 5, 1 moved to the interpolation frame positions by motion compensation vector. For example, the MC interpolated frame signal of frame order 2 is generated from a 50-Hz front frame signal S3 of frame order 1 and a current frame signal S2 of frame order 2. The MC interpolated frame signal of frame order 3 is generated from a 50-Hz front frame signal S3 of frame order 2 and a current frame signal S2 of frame order 3. The following MC interpolated signals are also similarly generated. In other words, the motion compensation vectors Vpr $(PV^*(Ka+kb))$ and Vct$(PV^*(kb/Ka+kb)$ are produced on the basis of the motion vector PV between the current frame S2 and the previous frame S3. As shown in Fig. 22C, a signal of pixel $(x,y)$ on the interpolation frame is generated by taking the average value of a signal Spr=S3(x1,y1) at a point A'(x1,y1) to which the pixel A $(x,y)$ of the previous frame S3 is moved by shifting it a horizontal component Vprx and vertical component Vpry of the motion vector Vpr and a signal Sct=S2(x2,y2) at a point A''(x2,y2) to which the pixel A$(x,y)$ of the current frame S2 is moved by shifting it horizontal component Vctx and vertical component Vcty.

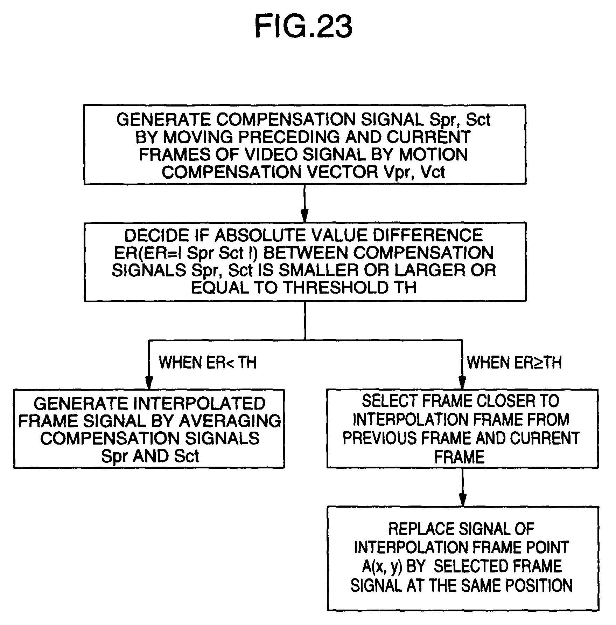

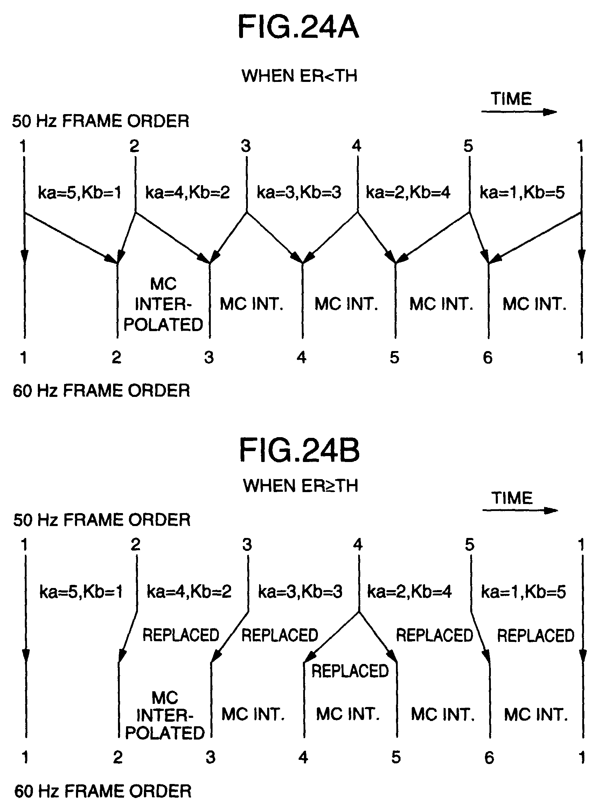

The generation of the motion compensation interpolation frame according to the invention will be briefly described with reference to Figs. 23 and 24A, 24B.

Fig. 23 is a flowchart for the signal processing. First, similarly as in the prior art, the previous frame and current frame are moved by the motion compensation vectors Vpr, Vct to produce compensation signals Spr, Sct. Then, the difference ER (|Spr-Sct|) between the absolute values of the compensation signals Spr, Sct is calculated, and compared with a threshold TH to decide the degree of the accuracy of the motion compensation vector.

If the absolute value difference component ER is smaller than the threshold TH (ER<TH), the accuracy of the motion compensation vector is decided high, and the interpolation frame signal is generated from the average value of compensation signals Spr, Sct.

If the difference component ER is larger than or equal to the threshold TH (ER≥TH), the accuracy of the motion compensation vector is decided low, and the interpolation frame is selected from a frame closer to one of the previous frame and current frame from the time point of view. In addition, the signal at the point A $(x,y)$ of the interpolation frame is replaced by the signal at the same point as the selected frame.

Figs. 24A and 24B are schematic diagrams showing the generation of the interpolation frame signal. Fig. 24A shows the case of ER<TH in which the interpolation frame signal is generated from the average value between the compensation signals Spr, Sct. If ER≥TH as shown in Fig. 24B, the interpolation frame is selected from a frame closer to one of the current frame and previous frame from the time point of view. The signal of pixel A $(x,y)$ of interpolation frame is generated from the pixel A $(x,y)$ of the selected signal. For example, the 60-Hz MC interpolated frames of frame order 2, 3, 4, 5, 6 are replaced by the A $(x,y)$ pixel signals of the selected 50-Hz frame signals of order 2, 3, 4, 4, 5.

In this way, the picture quality deterioration peculiar to the motion compensation processing can be substantially suppressed by an extremely simple signal processing.

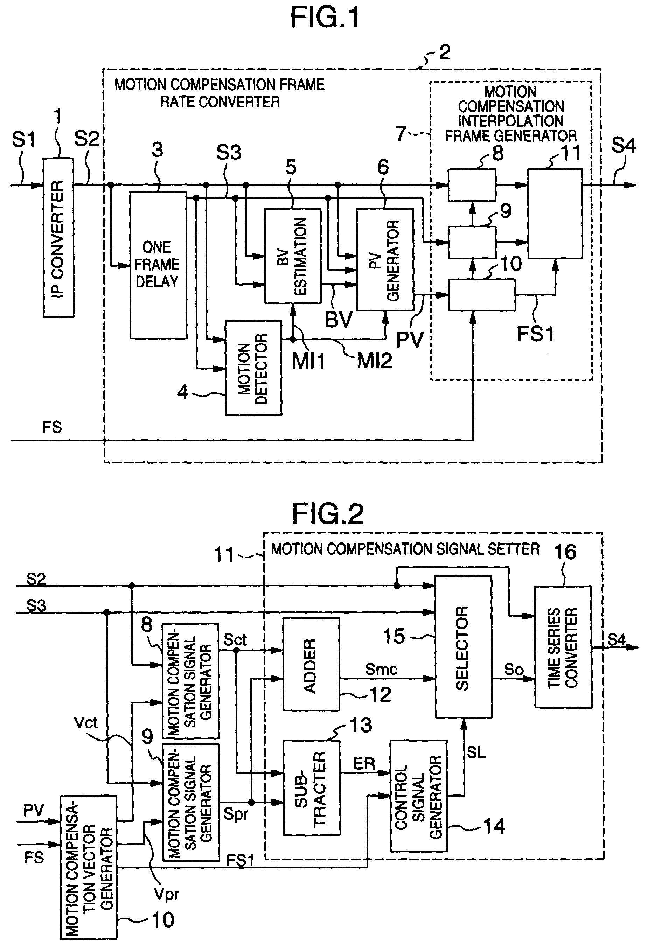

The first embodiment of the invention will be described with reference to Figs. 1 to 9.

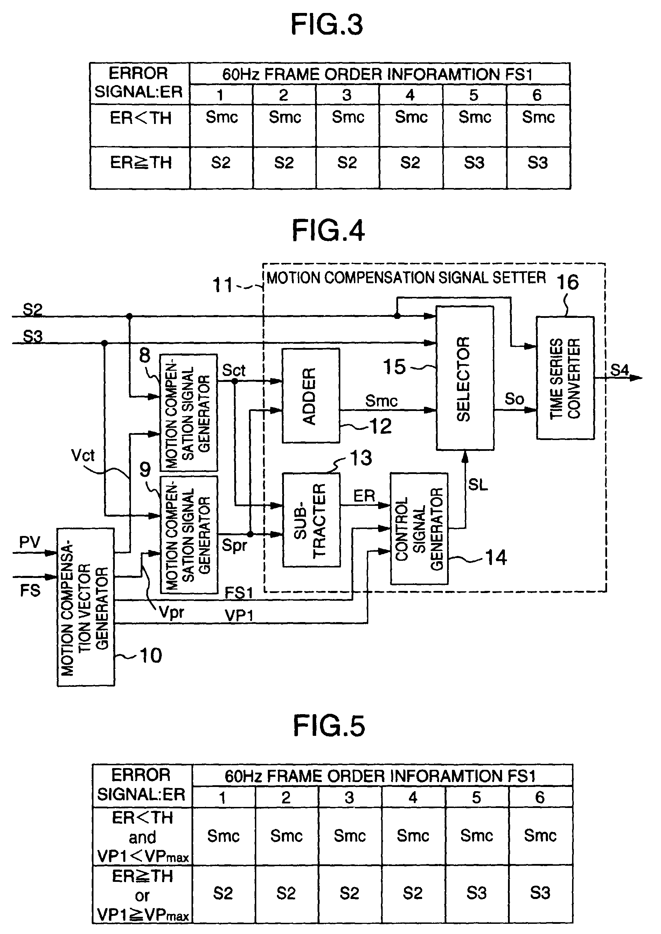

Fig. 1 is a block diagram of a format conversion apparatus according to this embodiment. This apparatus includes an IP (interlaced-progressive scan) conversion 1, and a motion compensation frame rate conversion 2 as illustrated. The motion compensation frame rate conversion 2 has a one-frame delaying device 3, a motion detection 4, block unit motion vector estimation block 5, a pixel unit motion vector generator 6, and a motion compensation interpolation frame generator 7. The motion compensation interpolation frame generator 7 has a current frame motion compensation signal generator 8, a previous frame motion compensation signal generator 9, a motion compensation vector generator 10, and a motion compensation signal setter 11. In Fig. 1, the elements in the motion compensation interpolation frame generator 7 are briefly shown. The details of the connection are illustrated in Fig. 2 or Fig. 4.

The IP conversion 1 receives an input video signal S1 of interlaced scanning type (including a luminance signal component and color difference signal components), and makes interlaced-progressive scan conversion. For example, the luminance signal component undergoes motion-adaptive interpolation processing, and the color difference signals suffer interpolation processing between lines. Thus, a signal of interpolated scanning lines is generated, and a progressive scanning signal sequence S2 (luminance signal component, and color difference signal components) is produced from the output end. When the input video signal is a telecine signal (a television-format signal produced by converting a movie film image by 2-3 pull-down process), a progressive scan signal sequence of film image mode is produced by the interpolation processing of film mode (in which an interpolated scan signal is generated by an interlaced scan signal belonging to the same film frame).

The motion compensation frame rate conversion 2 generates a signal sequence of interpolation frames by motion compensation processing, makes signal processing for frame rate conversion, and produces a video signal sequence S4 (luminance signal component and color difference signal components) of progressing scan mode of which the frame frequency is higher than the input video signal sequence.

The motion detection 4 makes subtraction between the luminance signal components of the current frame signal sequence S2 and the delayed previous frame signal sequence S3 that has passed through the one-frame delaying device 3, and extracts a difference signal of one frame. This signal is further quantized to be a binary signal, and produces motion detected signals M11, M12.

The block unit motion vector estimation block 5 detects motion vector of block unit (for example, 16 pixels × 16 lines or 8 pixels × 8 lines) by block matching processing. The pixel unit motion vector generator 6 generates pixel unit motion vector PV on the basis of block unit motion vector. The details will be described later. In the motion compensation interpolation frame generator 7, the motion compensation vector generator 10 generates motion compensation vector on the basis of pixel unit motion vector PV. The previous frame motion compensation signal generator 9 generates the interpolation frame signal Spr from the previous frame signal S3 moved by this motion interpolation vector. The current frame motion compensation signal generator 8 generates the interpolation frame signal Sct from the current frame signal S2 moved by this motion interpolation vector. The motion compensation signal setter 11 selects the average value of the signals Sct, Spr when the difference component ER between the absolute values of the signals Sct, Spr is smaller than the threshold TH (for example, about 16 levels in the case of 8 bit quantization), or a frame signal closer from the time point of view when it is larger than or equal to the threshold TH, thus, producing the signal sequence S4 with its motion compensation frame rate converted.

The main block in this embodiment will be described below.

Fig. 2 shows a first example of the structure of the motion compensation interpolation frame generator 11 as the main element of the invention.

The motion compensation vector generator 10 receives the pixel unit motion vector PV and frame progressive control signal FS, and generates motion compensation vectors Vct, Vpr as shown in Fig. 22 at (a). In other words, the pixel unit motion vector PV is weighted by changed coefficients Ka, Kb, and calculated as in the equation (1) to produce compensation interpolation motion vectors Vpr, Vct.

$$Vpr=PV^{*}ka/(ka+kb)$$

$$Vct=-PV^{*}kb/(ka+kb) \tag{1}$$

For example, for interpolation frame of order 2, the coefficients ka, kb are changed as $Vpr=PV^{*}5/6$, $Vct=-PV^{*}1/6(ka=5,kb=1)$, and for interpolation frame of order 3, the coefficients ka, kb are changed as $Vpr=PV^{*}4/6$, $Vct=-PV^{*}2/6(ka=4,Kb=2)$. Thus, the generated motion compensation vectors have no positional shift in the time direction. In addition, the motion compensation vector generator produces frame order information FS1.

The current frame motion compensation signal generator 8 receives the current frame signal S2 and motion compensation vector Vct, and generates the motion compensation signal Sct. The previous frame motion correction signal generator 9 receives the previous frame signal S3 and motion compensation vector Vpr, and generates the motion compensation signal Spr. In other words, as illustrated in Fig. 22 at (c), the current frame signal S2 is processed so that the point A(x,y) is moved by the compensation interpolation movement vector Vct (horizontal component Vctx, vertical component Vcty) to produce the signal Sct at the point A" (x2,y2)=(x- Vctx,y-Vcty). The previous frame signal S3 is processed so that the point A(x,y) is moved by the compensation interpolation motion vector Vpr (horizontal component Vprx, vertical component Vpry) to produce the signal Spr at the point A'(x1,y1)=(x+Vprx,y+Vpry). Thus, the interpolated frame signal at point A(x,y) can be generated from those signals. Therefore, the motion compensation signals Spr, Sct can be given by the equation (2).

$$Spr=S3(x+Vprx,y+Vpry)$$

$$Sct=S2(x-Vctx,y-Vcty) \tag{2}$$

This signal processing can be simply realized by controlling the operation of reading a memory circuit incorporated in the motion compensation signal generator. In other words, the address to read is shifted in position by the motion compensation vectors Vpr, Vct, and the signals of pixels corresponding to points A', A" are read according to this generated address.

The motion compensation signal setter 11 includes an adder 12, a subtracter 13, a control signal generator 14, a selector 15, and a time series converter 16. The adder 12 adds and averages the motion compensation signals Spr, Sct, and produces the result as signal Smc. The subtracter 13 makes subtraction between the luminance signal components of the motion compensation signals Spr, Sct or between the luminance signal component and color difference components, and produces the absolute value of the result as signal ER.

The control signal generator 14 receives the signal ER and frame order information FS1, and generates on these input signals a signal SL for use in controlling the selector 15 to select a signal. Fig. 3 briefly shows this operation. When the error signal ER is smaller than the threshold TH (ER<Th), the control signal SL is set so that the selector selects the motion compensation signal Smc as illustrated in Fig. 24A. When the error signal ER is larger than or equal to the threshold TH (ER≥TH), the control signal SL is fixed according to the frame order information FS1 so that the selector selects a frame signal closer to the interpolation frame from the time point of view. That is, as shown in Fig. 24B, the current frame signal S2 is selected for 60-Hz frame order 1 to 4, and the previous frame signal S3 is selected for frame order 5 to 6.

The selector 15 is responsive to the control signal SL to select any one of the signals S2, S3, Smc, and to produce a signal So as a selected signal.

The time series converter 16 makes time base compression and time series rearrangement, and as shown in Figs. 24A and 24B, it produces the motion compensation frame rate converted signal S4 that is a signal sequence of signal S2 for 60-Hz frame order 1 or signal So for frame order 2 to 6.

Fig. 4 is a block diagram showing a second example of the structure of the motion compensation interpolation frame generator. This circuit arrangement makes frame interpolation processing for motion compensation only when there is noticeable motion judder or a special motion such as horizontal pan, upper and lower pan or character scroll.

The motion compensation vector generator 10 in Fig. 4, similarly as in the first example of the structure, generates the motion compensation vectors Vct, Vpr, and frame order information FS1 on the basis of the pixel unit motion vector PV and frame order control signal FS. In addition, this example generates the absolute value component VP1 of velocity of the pixel unit motion vector PV.

The control signal generator 17 responds to the signals ER, FS1, VP1 to generate the signal SL for controlling the selector 15 to select a signal. Fig. 5 schematically shows this operation. When the error signal ER is smaller than the threshold TH (ER<TH), and when the signal VP1 is smaller than a fixed value Vpmax (VP1<Vpmax), the control signal SL is set so that the motion compensation signal Smc can be selected. When the error signal ER is larger than or equal to the threshold TH (ER≥TH) or when the signal VP1 is larger than or equal to Vpmax (VP1≥Vpmax), the control signal SL is set so that the signal S2 or S3 can be selected. The fixe value Vpmax is set for an upper limit of velocity, for example, a velocity of about one second/picture frame width or one second/picture frame height at which the motion judder interference becomes noticeable due to the motion such as horizontal pan, vertical pan or scroll.

The other elements makes the same operations as in the first example of structure, and thus will not be described.

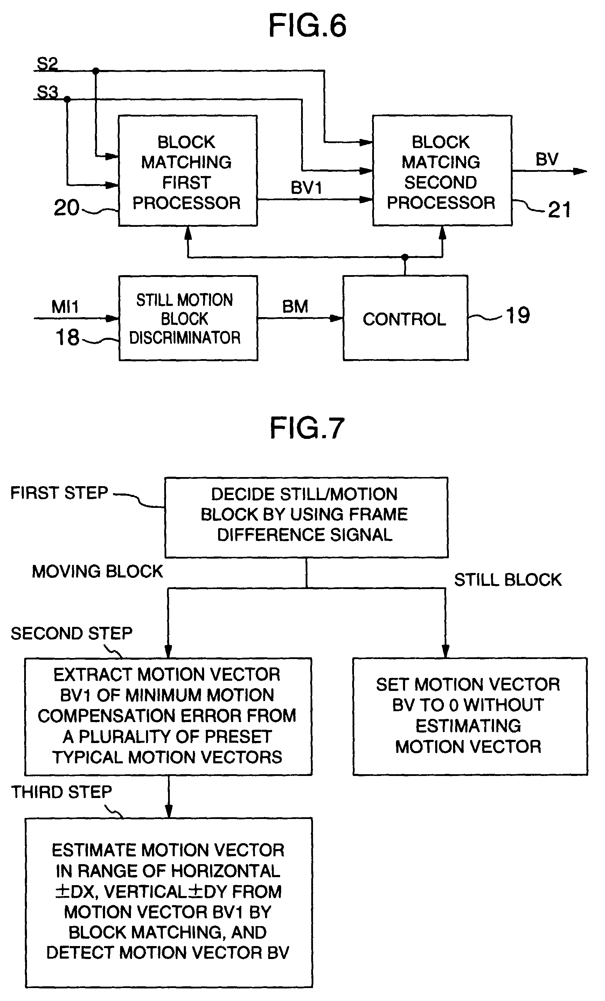

One example of the structure of the block unit motion vector estimation block will be described with reference to Fig. 6. A still motion discriminator 18 detects the presence or absence of 1 of the motion detected signal MI1 in each block unit (for example, 16 pixels × 16 lines or 8 pixels × 8 lines). When the signal MI1 is all zero, it decides as a still block, and produces a signal BM of 0. When the signal MI1 is in the other states, it decides as a moving picture block, and produces signal BM of 1. The motion detected signal MI1 produced from the motion detector 4 shown in Fig. 1 is a quantized binary signal that takes 1 when the difference component between the absolute values of the luminance signals of the current frame signal S2 and the previous frame signal S3 is larger than or equal to a threshold THa, or 0 when it is smaller than the threshold THa.

The motion vector estimation of block units is executed according to the signal processing shown in the flowchart of Fig. 7. The above-mentioned still or moving picture block decision is made at the first step in Fig. 7. At the second step, when the signal BM is 0, or still block, the motion vector estimation is not performed, and the block unit motion vector BV is set to zero. When the signal BM is 1, or moving picture block, the following motion vector estimation is carried out.

A block matching first processor 20 makes the moving picture block side processing at the second step in Fig. 7. At this step, a plurality of typical motion vectors are prepared, and when the motion compensation error calculated by block matching process using the luminance signals of the current frame signal S2 and previous frame signal S3 is the minimum, the corresponding typical motion vector BV1 is produced. The plurality of typical motion vectors can include the motion vector of the block just before the estimation has been finished.

The block matching second processor 21 executes the third step in Fig. 7. This processor receives the current frame signal S2 and the previous frame signal S3, uses the luminance signal components of those signals, and calculates the motion compensation error by block matching process as to the motion vector within the range of ±DX in the x component and ±DY in the y component from the starting point of typical motion vector BV1. When the error is the minimum, the corresponding block unit motion vector BV is produced.

A control 19 is responsive to the signal BM to generate control signals necessary for the block matching first processor 20 and second processor 21 to operate.

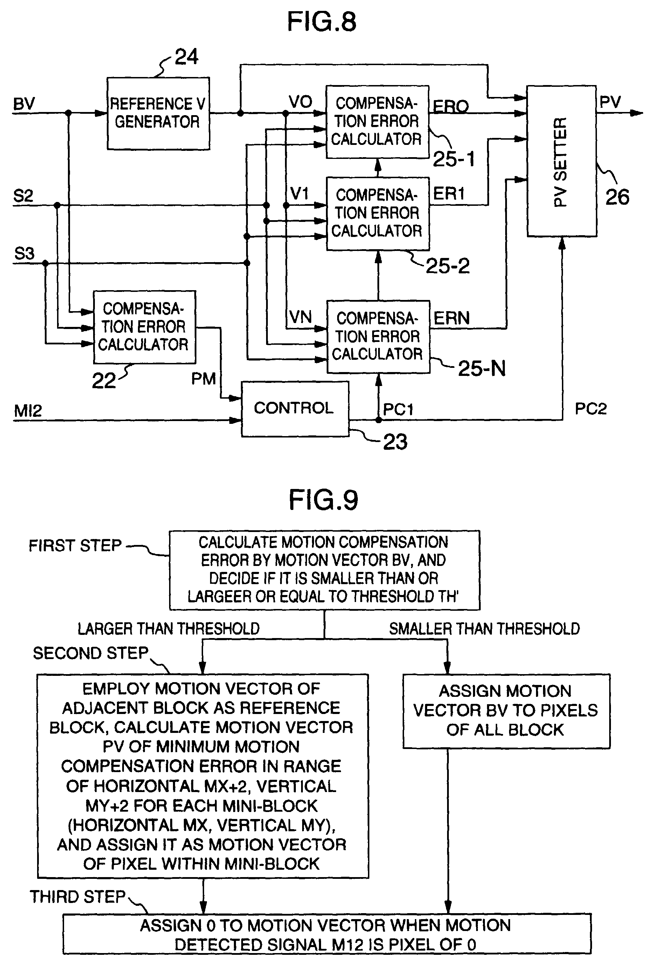

Fig. 8 shows an example of the structure of the pixel unit motion vector generator, and Fig. 9 is a flowchart for the signal processing.

A compensation error calculator 22 executes the first step in Fig. 9. That is, it calculates the motion compensation error by the block unit motion vector BV as to the luminance signal components of the current frame signal S2 and previous frame signal S3. When the error is smaller than a threshold TH', it produces a signal PM of 0. When the error is larger than or equal to the threshold TH', it produces signal PM of 1.

The control 23 receives the signal PM and motion detected signal M12, and generates on the basis of these signals control signals PC1, PC2 necessary for the second and third steps to make signal processing in Fig. 9. The motion detected signal M12 produced from the motion detector 4 in Fig. 1 is a quantized binary signal that takes 0 when the difference signal between frames is 0, and 1 when it is the other value.

Compensation error calculators 25-1, ..., 25-N execute the second step for over threshold in Fig. 9. In other words, when the control signal PC1 is larger than or equal to the threshold, they use the current block motion vector V0, and adjacent block motion vectors V1, ..., VN produced from a reference motion vector generator 24, and calculate motion compensation error ER0, ER1, ..., ERN for each mini-block (for example, horizontal MX=2, vertical MY=2, or 2 pixels × 2 lines) in the calculation range of 4 horizontal (MX+2) pixels, 4 vertical (MY+2) lines. This motion compensation error can be calculated according to the equation (3) using the luminance signal components of the current frame signal S2 and previous frame signal S3 or any one of the luminance signal components and color difference signal components.

$$ER0 = \Sigma\ abs\{S2(x,y) - S3(V0)\} = \Sigma\ abs\{S2(x,y) - S3(x+V0x, y+V0y)\}$$

$$ER1 = \Sigma\ abs\{S2(x,y) - S3(V1)\} = \Sigma\ abs\{S2(x,y) - S3(x+V1x, y+V1y)\}$$

$$ER2 = \Sigma\ abs\{S2(x,y) - S3(V2)\} = \Sigma\ abs\{S2(x,y) - S3(x+V2x, y+V2y)\}$$

$$\cdots\ \cdots\ \cdots\ \cdots\ \cdots\ \cdots\ \cdots\ \cdots\ \cdots\ \cdots\ \cdots\ \cdots\ \cdots\ \cdots\ \cdots\ \cdots\ \cdots\ \cdots\ \cdots\ \cdots\ \cdots\ \cdots\ \cdots\ \cdots\ \cdots\ \cdots\ \cdots\ \cdots$$

$$ERN = \Sigma\ abs\{S2(x,y) - S3(VN)\} = \Sigma\ abs\{S2(x,y) - S3(x+VNx, y+VNy)\}$$

$$(3)$$

Here, S2 (x,y) is the pixel signal of current frame within the calculation region, S3 (VN) is the pixel signal of previous frame moved in position by motion vector VN, abs{ } is the absolute value, $\Sigma$ is the sum of the pixels within the calculation region, VNx is the x component of motion vector VN, and VNy is the y component.

A pixel motion vector setter 26 executes the second step for less than threshold, and the third step in Fig. 9. When the control signal PC2 is smaller than the threshold, it directly produces the motion vector V0 of current block as a pixel unit motion vector PV. When the control signal is larger than or equal to the threshold, it produces a motion vector of the minimum one of the motion compensation error ER0, ER1, ..., ERN as a motion vector of pixels within each mini-block. When the motion detected signal MI2 is a pixel of 0, the control signal PC2 forces the pixel unit motion vector PV to be 0.

According to this embodiment, as mentioned above, it is possible to provide a format conversion apparatus capable of greatly suppressing the picture quality deterioration peculiar to the motion compensation processing and producing a video signal of high quality by extremely simple signal processing. In addition, the first embodiment has a great effect for low cost and high picture quality.

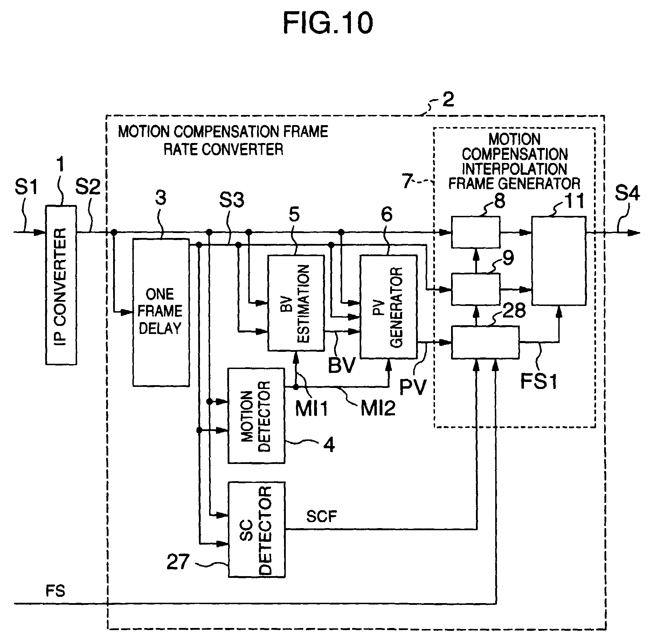

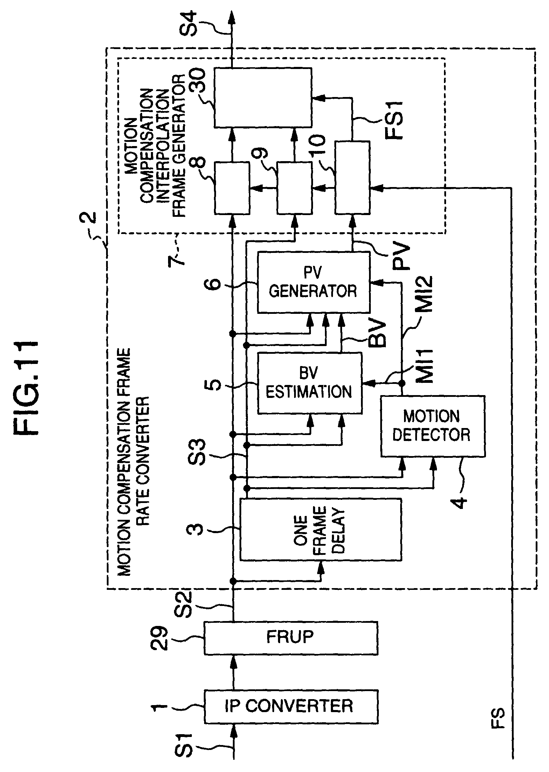

The second embodiment of the invention will be described with reference to the block diagram of Fig. 10. This embodiment is suited to stop the signal processing for motion compensation in the scene change region. In Fig. 10, the IP conversion 1 to the motion compensation signal setter 11 operate in the same way as those in the first embodiment shown in Fig. 1. The arrangement of the elements within the frame generator 7 shown in Fig. 10 are schematically shown. The details are illustrated in Fig. 2 or Fig. 4. Similarly, this applies to the following diagrams of Fig. 11 and Figs. 13 to 17.

A scene change detector 27 detects a scene-changed region on the basis of the mode in which a difference signal component between frames occurs in one frame period. In general, since the region of scene change has image contents changed, the difference signal component between frames has a relatively large value. Thus, each pixel is quantized to be a binary value by using a threshold of a relatively high level. Then, pixels exceeding the threshold during one frame period are measured. When the pixels over the threshold occupies a half or more of the whole frame picture, that region is decided a scene change region. At this time, the SC detector produces an SCF signal of 1 during one frame period. When the other cases occur, it produces SCF signal of 0.

A motion compensation vector generator 28, when the SCF signal is 1, or indicates scene change region, produces not only the frame order information FS1, but also a signal to stop the motion compensation processing operation. When the motion compensation signal setter 11 receives this signal, it preferentially selects the current frame signal S2 or previous frame signal S3, and produces it at the output end.

Thus, according to this embodiment, it is possible to achieve a format conversion apparatus capable of avoiding picture quality deterioration due to the inaccuracy of the motion vector in the scene change region, and producing high quality video signals. Also, this embodiment has a great effect for low cost and high quality of picture.

The third embodiment of the invention will be described with reference to the block diagram of Fig. 11. This embodiment is suited to make motion compensation conversion of a signal sequence of which the frame rate is increased by frame repetition operation.

The interlaced scan input video signal S1 (luminance signal component and color difference signal components) is supplied to the IP conversion 1, which makes interlaced-progressive scan conversion. For example, the luminance signal component is processed by motion-adaptive interpolation processing to produce a signal of interpolated scanning lines, the color difference signal is processed by interline interpolation processing to produce a signal of interpolated scanning lines. As a result, the signal sequence S2 (luminance signal component and color difference signal components) is produced from the IP conversion 1.

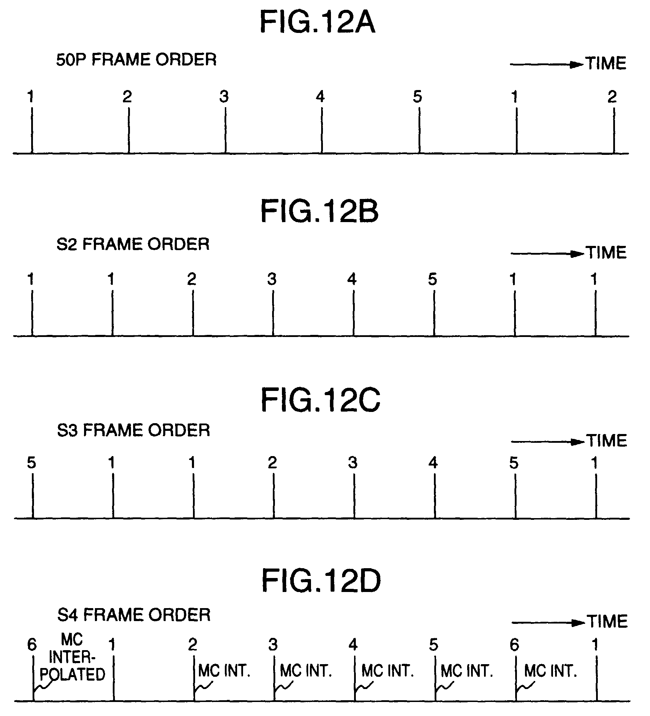

A frame rate up device (FRUP) 29 generates a signal sequence of which the frame rate is increased by frame repetition processing. In other words, the 50-Hz progressive signal sequence of frame order 1, 2, 3, 4, 5, 1 as shown in Fig. 12A is converted into the signal sequence S2 of frame order 1, 1, 2, 3, 4, 5, 1, 1 as shown in Fig. 12B.

The motion compensation frame rate converter 2 makes motion compensation processing on the signal S2, and the signal S3 into which the signal S2 is delayed one frame, as shown in Fig. 12C. A motion compensation signal generator 30 has a construction without the time series converter 16 shown in Fig. 2.

When the signals S2 and S3 are at frame order 1, both signals are the same frame signal, and hence the motion vector between the frames is always 0. Thus, a signal S4 of frame order 1 is produced as shown in Fig. 12D. When the other cases occur, the signals S2 and S3 are signals of different frames, and hence motion compensation frame interpolated (MC interpolated) signals S4 are produced for frame pairs of 1 and 2, 2 and 3, ... as illustrated.

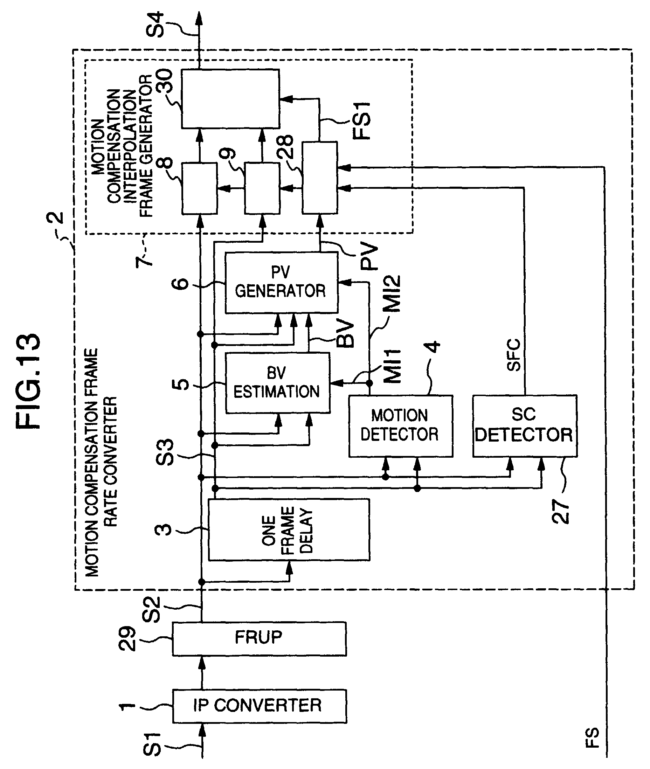

The fourth embodiment of the invention will be described with reference to the block diagram of Fig. 13. This embodiment has a scene change detector added, and is suited to stop the motion compensation processing for the scene change region.

This operation can be easily understood in the sections of the second and third embodiments, and thus will not be described.

According to the third and fourth embodiments, it is possible to realize a format conversion apparatus capable of avoiding the picture quality deterioration peculiar to the motion compensation processing, and thus producing high-quality video signals. In addition, these embodiments have the effect of remarkably reducing the cost and increasing the picture quality.

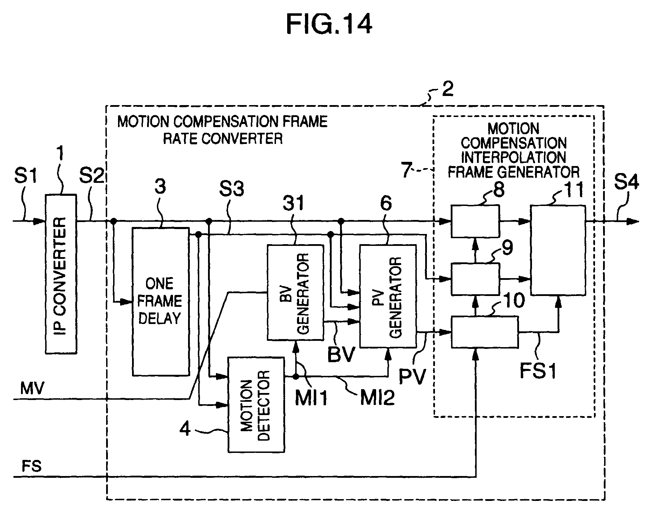

The fifth to eighth embodiments of the invention will be described with reference to the block diagrams of Figs. 14 to 17. These embodiments are suited to generate motion vectors of block units from the motion vector information for use in MPEG coding.

The fifth embodiment shown in Fig. 14 has a block unit motion vector generator 31 that has replaced the block unit motion vector estimation block 5 of the first embodiment of Fig. 1. This block unit motion vector generator 31 generates the block unit motion vector on the basis of the motion vector information MV used in MPEG coding. In other words, a motion vector of one frame period of a reproduced video signal sequence is generated on the basis of the motion vector of block unit or micro-block unit for use in coding forward prediction P pictures for MPEG coding and forward and backward prediction B picture. The moving picture block is not subjected to block matching processing estimation, and this motion vector is assigned to the block unit motion vector BV.

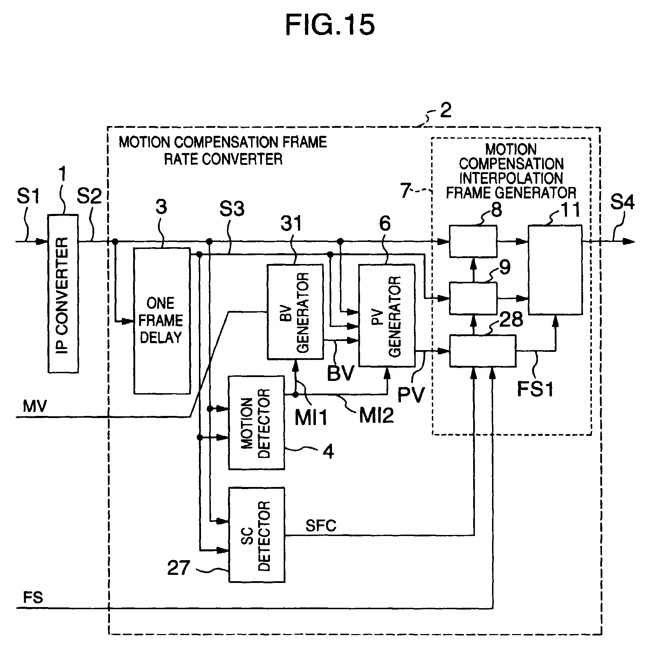

The sixth embodiment of Fig. 15 has the block unit motion vector generator 31 that has replaced the block unit motion vector estimation block 5 of the second embodiment of Fig. 10.

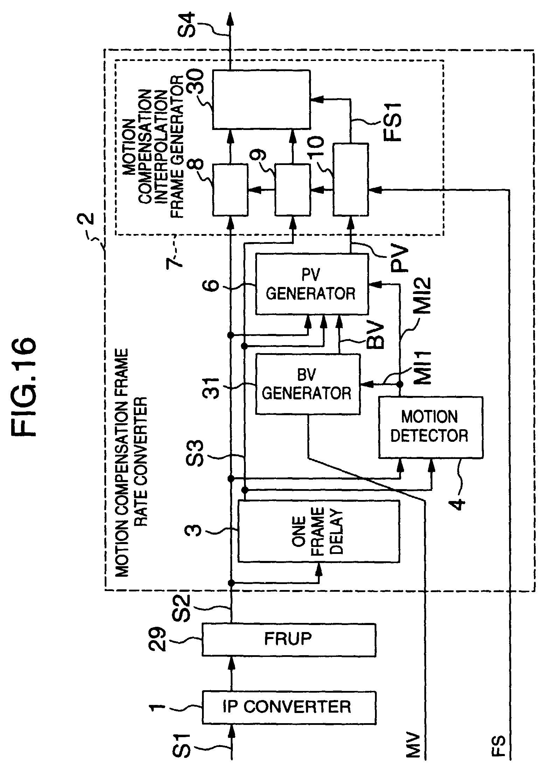

The seventh embodiment of Fig. 16 has the block unit motion vector generator 31 that has replaced the block unit motion vector estimation block 5 of the third embodiment of Fig. 11.

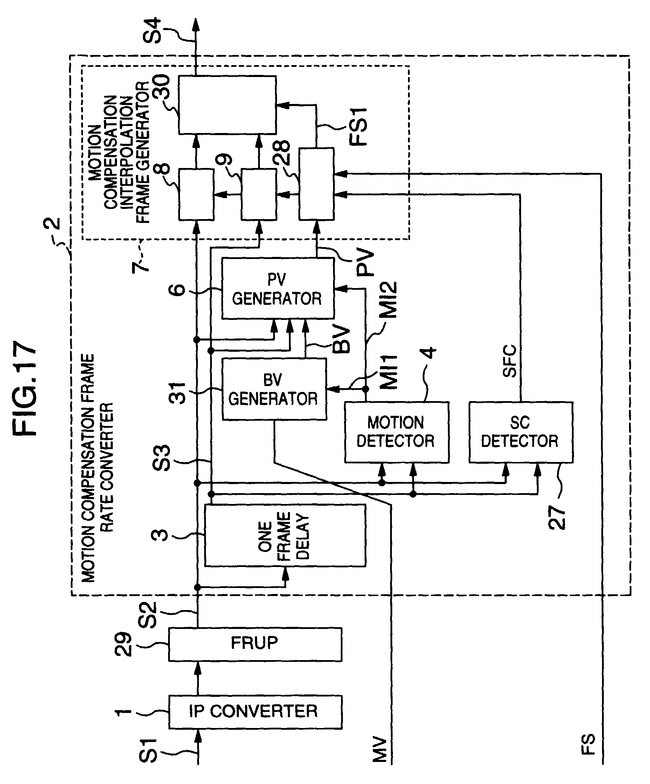

The eighth embodiment of Fig. 17 has the block unit motion vector generator 31 that has replaced the block unit motion vector estimation block 5 of the fourth embodiment of Fig. 13.

In either one of these embodiments, the block unit motion vector generator 31 has the same construction and make the same operation as that shown in Fig. 14.

According to the fifth to eighth embodiments mentioned above, the motion vector estimation and generation necessary for the motion compensation processing can be achieved by a small amount of arithmetic operation. Therefore, these embodiments have the effect of remarkably increasing the picture quality and reducing the cost.

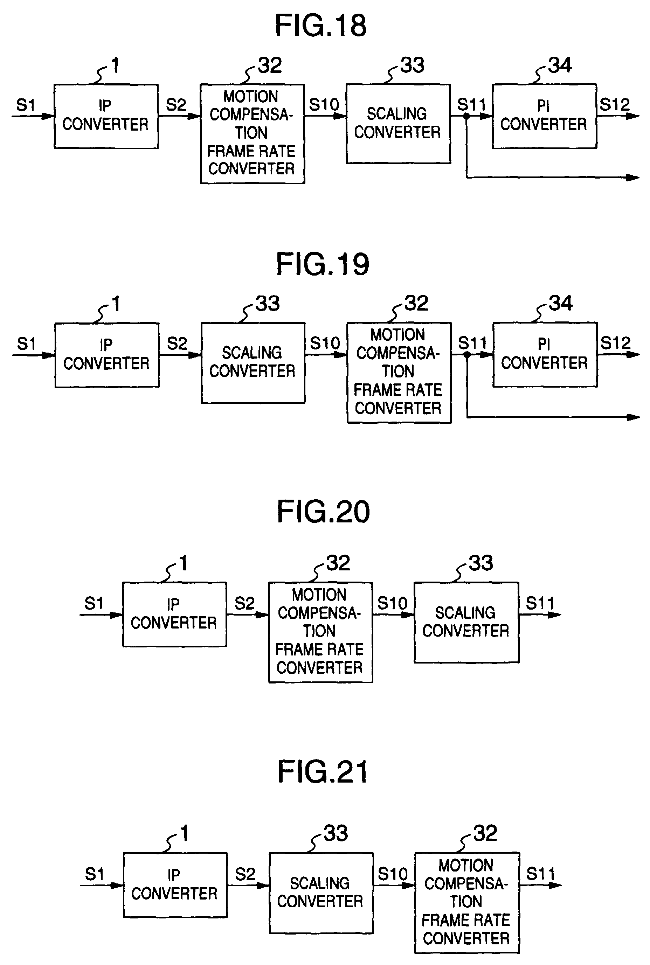

The application of the motion compensation frame rate converter according to the invention to the video signal format conversion signal processing apparatus will be described with reference to the block diagrams of Figs. 18 to Fig.

21. This signal processor can be used as multimedia such as a television receiver or personal computer.

Fig. 18 shows a first example of this case. The input signal S1 is supplied to the IP converter 1, where the interlaced scan signal is converted into the signal S2 of progressive scan by scanning line interpolation processing.

The motion compensation frame rate converter 32, which is constructed according to the first to eighth embodiments of the invention, makes motion compensation frame rate conversion processing, and produces a progressive-scan signal S10 of which the frame rate is increased by motion compensation frame interpolation.

A scaling converter 33 makes vertical magnification signal processing by linear interpolation characteristic vertical M-N conversion processing (M<N), or magnifies the scanning lines N/M times. In addition, it magnifies or reduces the picture size for multi window display. Then, it produces a scaling-processed signal S11 of progressive scan. This construction can be easily achieved by the prior art, and thus will not be described.

A PI converter 34 makes progressive-interlacing scanning conversion by scanning line 2:1 thinning out processing, and produces an interlaced scan signal S12.

Fig. 19 shows a second example of the case. The input signal S1 is supplied to the IP converter 1, where the interlaced scan signal is converted into the progressive scan signal S2 by scanning line interpolation.

The scaling converter 33 makes vertical reduction signal processing by linear interpolation characteristic vertical N-M conversion processing (M<N), or reduces the scanning lines N/M time. In addition, it magnifies or reduces the picture size for multi window display. Then, it produces a scaling-processed signal S10 of progressive scan. This construction can be easily achieved by the prior art, and thus will not be described.

The motion compensation frame rate converter 32, which is constructed according to the first to eighth embodiments of the invention, makes motion compensation frame rate conversion processing, and produces a progressive-scan signal S11 of which the frame rate is increased by motion compensation frame interpolation.

The interlaced scan signal S12 can be produced from a PI converter 34 which makes progressive-interlaced scanning conversion by scanning line 2:1 thinning out processing.

The third embodiment shown in Fig. 20 has no PI converter 34 that was provided in the first embodiment of Fig. 18. The fourth embodiment shown in Fig. 21 has no PI converter 34 that was provided in the second embodiment of Fig. 19. The operations of these embodiments are the same as the first and second embodiments, and thus will not be described.

According to the first to fourth embodiments of a video signal format conversion apparatus mentioned above, signals of various TV systems and image signals from personal computers can be converted into signals of various formats suitable for indicating on displays of various types, and in this case the picture quality can be increased with low cost. The present invention has the effect to remarkably reduce the cost, and increase the picture quality, of the multi media such as television receivers and personal computers, which are flexibly adaptable to a wide variety of inputs and outputs.

According to the present invention, there is provided a video signal format conversion method and apparatus capable of suppressing the picture quality from being reduced by simple signal processing, and producing pictures of high quality with low cost.

## Claims

1. A video signal format conversion method comprising the steps of:

   estimating a block unit motion vector on a basis of a video signal; and
   converting a frame rate of said video signal by use of an interpolation frame of said video signal generated from a pixel unit motion vector that is found from said block unit motion vector, or by use of an interpolation frame of said video signal generated from a frame signal of said video signal.

2. A method according to claim 1, wherein said step of converting the frame rate of said video signal utilizes an interpolation frame of said video signal generated on the basis of said pixel unit motion vector when the difference component between the absolute values of a motion compensation signal produced by moving a current frame signal in position by a motion compensation vector and another motion compensation signal produced by moving a previous frame signal by said motion compensation vector is smaller than a threshold, or utilizes an interpolation frame of said video signal generated from a frame signal of said video signal when the difference component is larger than or equal to said threshold.

3. A method according to claim 1 or 2, wherein said interpolation frame of said video signal generated from a frame signal of said video signal is generated on the basis of a frame signal closer to one of said current frame and said previous frame from the time point of view.

4. A method according to claim 2, wherein said difference component between said absolute values is produced on the basis of the difference between the luminance signal components of said two motion compensation signals or the difference between the luminance signal component and a color difference signal component.

5. A method according to claim 1, wherein said pixel unit motion vector is obtained by employing a block unit motion vector of a block belonging to the corresponding pixel as said pixel unit motion vector.

6. A video signal format conversion method comprising the steps of:

converting an interlaced scan video signal into a progressive scan signal sequence; and
converting a frame rate of said progressive scan signal sequence by motion compensation type frame interpolation processing,
said frame rate converting step comprising the steps of:
detecting presence or absence of a motion of a video signal from a difference signal component at least between adjacent frames of said progressive scan signal sequence;
generating a motion vector by block matching process; and
generating a signal sequence of interpolated frames by motion compensation processing using the motion compensation vector produced by said motion vector,
said interpolated frame signal sequence generating step being adapted to generate an interpolated frame signal from a frame signal closer to one of a current frame and a previous frame, from the time point of view, when the difference component between the absolute values of a motion compensation signal generated by moving said current frame signal by a motion compensation vector, and another motion compensation signal generated by moving said previous frame signal by a motion compensation vector is larger than and equal to a threshold.

7. A method according to claim 6, wherein said step of generating said interpolated frame signal sequence has a step of detecting a special motion of said video signal so that the operation of the frame interpolation processing using said motion compensation vector is limited when said special motion is detected.

8. A method according to claim 6, wherein said step of generating said interpolated frame signal sequence has a step of detecting a scene change according to an accumulated value within a scene change detection region of one frame period so that the operation of the frame interpolation processing using said motion compensation vector is stopped for a scene-change detected frame, and that said interpolated frame signal is generated from said current frame signal or said previous frame signal.

9. A method according to claim 6, wherein said step of generating said interpolated frame signal sequence has a step of detecting a special motion of said video signal and a step of detecting a scene change according to a motion detection region of one frame period so that the operation of a motion compensation frame interpolation processing using a motion compensation vector is performed when said special motion is detected, is stopped for a scene-detected frame, and that said interpolated frame signal is generated from said current frame signal or said previous frame signal.

10. A method according to claim 6, wherein said step of generating said interpolated frame signal sequence generates said interpolated frame signal on the basis of said pixel unit motion vector when the difference component between the absolute values of a motion compensation signal generated by moving a current frame signal using a motion compensation vector and another motion compensation signal generated by moving a previous frame signal using a motion compensation vector is smaller than a threshold.

11. A video signal format conversion apparatus comprising:

a block unit motion vector estimation block (5) for estimating a block unit motion vector on the basis of a video signal;
a pixel unit motion vector generator (6) for generating a pixel unit motion vector on a basis of said block unit motion vector; and
a motion compensation interpolated frame generator (7) for converting a frame rate of said video signal by using an interpolated frame of said video signal generated on the basis of said pixel unit motion vector or using an interpolated frame of said video signal generated from a frame signal of said video signal.

**12.** An apparatus according to claim 11, wherein said generator (7) for generating said motion compensation interpolated frame comprises a first motion compensation signal generator (8) for generating the compensation interpolated signal by moving a current signal using a motion compensation vector, a second motion compensation signal generator (9) for generating the compensation interpolated signal by moving a previous frame signal using a motion compensation vector, and a motion compensation signal setter (11) for selecting an interpolated frame of said video signal generated on the basis of said pixel unit motion vector when the difference component between the absolute values of the outputs from said first and second motion compensation signal generators is smaller than a threshold, and for selecting an interpolated frame generated from a video signal frame when the difference is larger than or equal to said threshold.

**13.** An apparatus according to claim 11 or 12, wherein said interpolated frame generated from a frame signal of said video signal is generated on the basis of a frame signal closer to one of said current frame and said previous frame from the time point of view.

**14.** An apparatus according to claim 12, wherein said absolute value difference component is produced on the basis of the difference between the luminance signal components of said two motion compensation signals or the difference between the luminance signal component and the color difference signal component.

**15.** A video signal format conversion apparatus comprising:

a scanning conversion (1) for converting an interlaced scan video signal into a progressive scan signal sequence; and
a motion compensation frame rate converter (2) for converting the frame rate of said progressive scan signal sequence by using motion compensation type frame interpolation processing, said motion compensation frame rate converter comprising a motion detector (4) for detecting the presence or absence of the motion of said video signal from the difference signal component between adjacent frames of said progressive scan signal sequence, a motion vector generator (5) for generating a motion vector by block matching processing, and a motion compensation interpolated frame generator (7) for generating an interpolated signal sequence by motion compensation processing using a motion compensation vector generated by said motion vector, said motion compensation interpolated frame generator generating an interpolated frame signal from a frame signal closer to one of said current frame and said previous frame from the time point of view.

**16.** An apparatus according to claim 15, wherein said motion compensation interpolated frame generator has a motion velocity detector for detecting a special motion of said video signal, and the operation for frame interpolation processing using a motion compensation vector is limited when said motion is detected.

**17.** An apparatus according to claim 15, wherein said motion compensation interpolated frame generator has a scene change detector (27) for detecting a scene change from an accumulated value within a motion detection region of one frame period, and said generator stops the operation of frame interpolation processing using a motion compensation vector for a scene change detected frame, and makes the operation of generating an interpolated frame signal from said current frame signal or said previous frame signal.

**18.** An apparatus according to claim 15, wherein said motion compensation interpolated frame generator has a motion velocity detector for detecting a special motion of said video signal, and a scene change detector (27) for detecting a scene change from an accumulated value within a motion detecting region of one frame period, so that said motion compensation interpolated frame generator makes the operation of frame interpolation processing using a motion compensation vector when the corresponding motion is detected by said motion velocity detector, stops the operation of motion compensation frame interpolation processing for a frame of which the scene change is detected by said scene change detector, and operates to generate an interpolated frame signal from said current frame signal or said previous frame signal.

**19.** An apparatus according to claim 15, wherein said motion vector generator has a block unit motion vector estimation block for estimating a block unit motion vector by block matching processing, and a pixel unit motion vector generator for generating a pixel unit motion vector by using said block unit motion vector.

**20.** An apparatus according to claim 19, wherein said block unit motion vector estimation block calculates a motion vector of which the motion compensation error is the minimum of a plurality of previously established typical motion vectors from a moving block of detected motion, and detects a motion vector of which the motion compensation error is the minimum of motion vectors within a predetermined range as a block unit motion vector on the basis of said motion vector.

21. An apparatus according to claim 19, wherein said block unit motion vector estimation block generates a block unit motion vector from a motion-detected moving picture block of said video signal coded in MPEG on the basis of the motion vector information sent in MPEG code.

22. An apparatus according to claim 19, wherein said pixel unit motion vector generator generates a pixel unit motion vector by calculating a motion vector of the minimum motion compensation error in mini-block units that are smaller than said block units.

23. An apparatus according to claim 22, wherein said pixel unit motion vector generator calculates the motion compensation error by using the luminance signal component of said video signal.

24. An apparatus according to claim 22, wherein said pixel unit motion vector generator calculates the motion compensation error by using the luminance signal component and chrominance signal component of said video signal.

25. A video signal format conversion apparatus comprising:

a motion compensation frame rate converter (2) for converting the frame rate of a video signal by using an interpolation frame of said video signal generated from the interpolation frame of said video signal on the basis of a motion vector obtained from said video signal or using an interpolation frame of said video signal generated from the frame signal of said video signal; and
a scaling converter (33) for changing at least one of the scanning line number and picture size of said video signal produced from said motion compensation frame rate converter.

26. An apparatus according to claim 25, wherein a scanning converter (1) for making interlaced-progressive scanning conversion of said video signal is provided before said motion compensation frame rate converter.

27. A video signal format conversion apparatus comprising:

a scaling converter (33) for changing a least one of the scanning line number and the picture size of a video signal; and
a motion compensation frame rate converter (32) for converting the frame rate of said video signal by using an interpolation frame of said video signal generated on the basis of a motion vector obtained from said video signal produced from said scaling converter or using an interpolation frame of said video signal generated from a frame signal of said video signal produced from said scaling converter.

28. An apparatus according to claim 27, wherein a scanning converter (1) for making interlaced-progressive scanning conversion of said video signal is provided before said scaling converter.

29. A video display apparatus comprising:

a scanning converter (1) for making interlaced-progressive scanning conversion of a video signal;
a motion compensation frame rate converter (32) for converting the frame rate of said video signal by using an interpolation frame of said video signal generated on the basis of a motion vector obtained from the output of said scanning converter or an interpolation frame of said video signal generated from a frame signal produced from the output of said scanning converter; and
a scaling converter (33) for changing at least one of the scanning line number and the picture size of said video signal produced from said motion compensation frame rate converter.

30. A video display apparatus comprising:

a scanning converter (1) for making interlaced-progressive scanning conversion of a video signal;
a scaling converter (33) for changing at least one of the scanning line number and the picture size of said video signal produced from said scanning converter; and
a motion compensation frame rate converter (32) for converting the frame rate of said video signal by using an interpolation frame of said video signal generated on the basis of a motion vector obtained from said video signal which said scaling converter generates or using an interpolation frame of said video signal generated from a frame signal of said video signal which said scaling converter generates.

# FIG.1

# FIG.2

## FIG.3

| ERROR SIGNAL:ER | 60Hz FRAME ORDER INFORAMTION FS1 | | | | | |
|---|---|---|---|---|---|---|
| | 1 | 2 | 3 | 4 | 5 | 6 |
| ER$<$TH | Smc | Smc | Smc | Smc | Smc | Smc |
| ER$\geqq$TH | S2 | S2 | S2 | S2 | S3 | S3 |

## FIG.4

## FIG.5

| ERROR SIGNAL:ER | 60Hz FRAME ORDER INFORAMTION FS1 | | | | | |
|---|---|---|---|---|---|---|
| | 1 | 2 | 3 | 4 | 5 | 6 |
| ER$<$TH and VP1$<$VPmax | Smc | Smc | Smc | Smc | Smc | Smc |
| ER$\geqq$TH or VP1$\geqq$VPmax | S2 | S2 | S2 | S2 | S3 | S3 |

# FIG.6

S2

S3

BLOCK MATCHING FIRST PROCESSOR

20

BLOCK MATCING SECOND PROCESSOR

21

BV1

BV

MI1

STILL MOTION BLOCK DISCRIMINATOR

18

BM

CONTROL

19

# FIG.7

FIRST STEP — DECIDE STILL/MOTION BLOCK BY USING FRAME DIFFERENCE SIGNAL

MOVING BLOCK

STILL BLOCK

SECOND STEP — EXTRACT MOTION VECTOR BV1 OF MINIMUM MOTION COMPENSATION ERROR FROM A PLURALITY OF PRESET TYPICAL MOTION VECTORS

SET MOTION VECTOR BV TO 0 WITHOUT ESTIMATING MOTION VECTOR

THIRD STEP — ESTIMATE MOTION VECTOR IN RANGE OF HORIZONTAL ±DX, VERTICAL±DY FROM MOTION VECTOR BV1 BY BLOCK MATCHING, AND DETECT MOTION VECTOR BV

# FIG.8

BV ——[ 24 REFERENCE V GENERATOR ]—— VO ——[ COMPENSA-TION ERROR CALCULATOR 25-1 ]—— ERO ——[ PV SETTER 26 ]—— PV

S2

V1 ——[ COMPENSA-TION ERROR CALCULATOR 25-2 ]—— ER1

S3

[ COMPENSA-TION ERROR CALCULATOR 22 ]

VN ——[ COMPENSA-TION ERROR CALCULATOR 25-N ]—— ERN

PM ——[ CONTROL 23 ]

MI2

PC1          PC2

# FIG.9

FIRST STEP —— [ CALCULATE MOTION COMPENSATION ERROR BY MOTION VECTOR BV, AND DECIDE IF IT IS SMALLER THAN OR LARGEER OR EQUAL TO THRESHOLD TH' ]

LARGER THAN THRESHOLD                    SMALLER THAN THRESHOLD

SECOND STEP —— [ EMPLOY MOTION VECTOR OF ADJACENT BLOCK AS REFERENCE BLOCK, CALCULATE MOTION VECTOR PV OF MINIMUM MOTION COMPENSATION ERROR IN RANGE OF HORIZONTAL MX+2, VERTICAL MY+2 FOR EACH MINI-BLOCK (HORIZONTAL MX, VERTICAL MY), AND ASSIGN IT AS MOTION VECTOR OF PIXEL WITHIN MINI-BLOCK ]

[ ASSIGN MOTION VECTOR BV TO PIXELS OF ALL BLOCK ]

THIRD STEP —— [ ASSIGN 0 TO MOTION VECTOR WHEN MOTION DETECTED SIGNAL M12 IS PIXEL OF 0 ]

# FIG.10

# FIG.11

# FIG.12A

50P FRAME ORDER → TIME

| 1 | 2 | 3 | 4 | 5 | 1 | 2 |

# FIG.12B

S2 FRAME ORDER → TIME

| 1 | 1 | 2 | 3 | 4 | 5 | 1 | 1 |

# FIG.12C

S3 FRAME ORDER → TIME

| 5 | 1 | 1 | 2 | 3 | 4 | 5 | 1 |

# FIG.12D

S4 FRAME ORDER → TIME

| 6 MC INTER-POLATED | 1 | 2 MC INT. | 3 MC INT. | 4 MC INT. | 5 MC INT. | 6 MC INT. | 1 |

# FIG.13

EP 0 909 092 A2

# FIG.14

# FIG.15

FIG.16

MOTION COMPENSATION FRAME RATE CONVERTER

MOTION COMPENSATION INTERPOLATION FRAME GENERATOR

IP CONVERTER

FRUP

ONE FRAME DELAY

MOTION DETECTOR

BV GENERATOR

PV GENERATOR

S1 S2 S3 S4

29 1 3 31 6 30 8 9 10

FS1 FS MV MI1 MI2 BV PV

# FIG.17

## FIG.18

S1 → **1** IP CONVERTER → S2 → **32** MOTION COMPENSA-TION FRAME RATE CONVERTER → S10 → **33** SCALING CONVERTER → S11 → **34** PI CONVERTER → S12

## FIG.19

S1 → **1** IP CONVERTER → S2 → **33** SCALING CONVERTER → S10 → **32** MOTION COMPENSA-TION FRAME RATE CONVERTER → S11 → **34** PI CONVERTER → S12

## FIG.20

S1 → **1** IP CONVERTER → S2 → **32** MOTION COMPENSA-TION FRAME RATE CONVERTER → S10 → **33** SCALING CONVERTER → S11

## FIG.21

S1 → **1** IP CONVERTER → S2 → **33** SCALING CONVERTER → S10 → **32** MOTION COMPENSA-TION FRAME RATE CONVERTER → S11

# FIG.22A

PRECEDING FRAME S3    INTERPOLATED FRAME    CURRENT FRAME S2

PV

ka    kb    TIME

Vpr=PV * (ka/ka+kb)        Vct=PV * (kb/ka+kb)

# FIG.22B

TIME DIRECTION

50 Hz FRAME ORDER

1    2    3    4    5    1

ka=5,Kb=1 | ka=4,Kb=2 | ka=3,Kb=3 | ka=2,Kb=4 | ka=1,Kb=5

MC INTER-POLATED | MC INT. | MC INT. | MC INT. | MC INT.

1    2    3    4    5    6    1

60 Hz FRAME ORDER

# FIG.22C

PREVIOUS FRAME S3    INTERPOLATED FRAME    CURRENT FRAME S2

A(x,y)    A(x,y)    A(x,y)

A'(x1,y1)            A"(x2,y2)

x1=x+Vprx                    x2=x-Vctx
y1=y+Vpry                    y2=y-Vcty
Spr=S3(x1,y1)            Sct=S2(x2,y2)
WHEN MOTION VECTOR IS CORRECT    Spr=Sct
WHEN MOTION VECTOR IS INCORRECT    Spr≠Sct

# FIG.23

```
┌─────────────────────────────────────┐
│  GENERATE COMPENSATION SIGNAL Spr, Sct│
│    BY MOVING PRECEDING AND CURRENT    │
│    FRAMES OF VIDEO SIGNAL BY MOTION   │
│     COMPENSATION VECTOR Vpr, Vct      │
└─────────────────────────────────────┘
                   │
                   ▼
┌─────────────────────────────────────┐
│   DECIDE IF ABSOLUTE VALUE DIFFERENCE │
│   ER(ER=l Spr Sct l) BETWEEN COMPENSATION│
│  SIGNALS Spr, Sct IS SMALLER OR LARGER OR│
│         EQUAL TO THRESHOLD TH         │
└─────────────────────────────────────┘
```

WHEN ER< TH                    WHEN ER≥TH

```
┌─────────────────────────┐   ┌─────────────────────────┐
│  GENERATE INTERPOLATED   │   │   SELECT FRAME CLOSER TO │
│ FRAME SIGNAL BY AVERAGING│   │   INTERPOLATION FRAME FROM│
│   COMPENSATION SIGNALS   │   │  PREVIOUS FRAME AND CURRENT│
│      Spr AND Sct         │   │          FRAME           │
└─────────────────────────┘   └─────────────────────────┘
                                           │
                                           ▼
                              ┌─────────────────────────┐
                              │     REPLACE SIGNAL OF    │
                              │  INTERPOLATION FRAME POINT│
                              │    A(x, y) BY  SELECTED FRAME│
                              │ SIGNAL AT THE SAME POSITION│
                              └─────────────────────────┘
```

# FIG.24A

WHEN ER<TH

TIME →

50 Hz FRAME ORDER

| 1 | 2 | 3 | 4 | 5 | 1 |
|---|---|---|---|---|---|
| ka=5,Kb=1 | ka=4,Kb=2 | ka=3,Kb=3 | ka=2,Kb=4 | ka=1,Kb=5 | |

MC INTER-POLATED | MC INT. | MC INT. | MC INT. | MC INT.

| 1 | 2 | 3 | 4 | 5 | 6 | 1 |

60 Hz FRAME ORDER

# FIG.24B

WHEN ER≥TH

TIME →

50 Hz FRAME ORDER

| 1 | 2 | 3 | 4 | 5 | 1 |
|---|---|---|---|---|---|
| ka=5,Kb=1 | ka=4,Kb=2 | ka=3,Kb=3 | ka=2,Kb=4 | ka=1,Kb=5 | |

REPLACED / REPLACED | REPLACED \ REPLACED

REPLACED

MC INTER-POLATED | MC INT. | MC INT. | MC INT. | MC INT.

| 1 | 2 | 3 | 4 | 5 | 6 | 1 |

60 Hz FRAME ORDER